# EUROPEAN PATENT APPLICATION

(11) **EP 2 085 140 A1**
(43) Date of publication of application: **05.08.2009**
(21) Application number: 07807440.8
(22) Date of filing: 18.09.2007
(51) Int. Cl.: B01J 29/70, B01D 53/94, B01J 35/04

(54) **CATALYST FOR BURNING CARBON-CONTAINING SUBSTANCE, PROCESS FOR PRODUCTION OF THE CATALYST, MATERIAL HAVING CATALYST CARRIED THEREON, AND PROCESS FOR PRODUCTION OF THE MATERIAL**

(30) Priority: 19.09.2006 JP 2006252121; 10.09.2007 JP 2007234749
(71) Applicant: NIPPON SOKEN, INC., Aichi 445-0012 (JP); DENSO CORPORATION, Kariya-city, Aichi 445-0012 (JP)
(72) Inventor: MIZUTANI, Keisuke, Nishio-city Aichi 445-0012 (JP); SUZAWA, Takumi, Nishio-city Aichi 445-0012 (JP); OHYAMA, Naohisa, Nishio-city Aichi 445-0012 (JP); YAMASHITA, Yukihiro, Kariya-city Aichi 448-8661 (JP)
(74) Representative: TBK-Patent
(86) International application number: PCT/JP2007/068039
(87) International publication number: WO 2008/035652

(57) **Abstract**

A carbon-based material combustion catalyst is manufactured by performing a mixing step, a drying step, and a burning step. In the mixing step, zeolite except for sodalite, an alkali metal source, and/or an alkaline earth metal source are mixed in water at a predetermined ratio. In the drying step, a liquid mixture after the mixing step is heated to evaporate the water, thereby obtaining a solid. In the burning step, the solid is burned at a temperature of 600 °C or more. The obtained carbon-based material combustion catalyst causes carbon-based material to be stably burned and removed at a low temperature for a long time.

## Description

### TECHNICAL FIELD

The present invention relates to a carbon-based material combustion catalyst which is used for burning and removing carbon-based material, such as carbon fines (e.g., particulate matter PM), contained in an exhaust gas, and to a manufacturing method thereof. Further, the invention also relates to a catalyst carrier for supporting the carbon-based material combustion catalyst on a ceramic substrate, and to a manufacturing method thereof.

### BACKGROUND ART

Carbon fines (e.g., particulate matter PM) contained in an exhaust gas of an internal combustion engine, such as a diesel engine, are burned and removed by a diesel particulate filter (DPF) or the like. In order to remove as much PM as possible at low cost, it is desireable to perform the burning and removing of the PM at a relatively low temperature. Thus, the DPF supporting the catalyst for promoting combustion of carbon-based material, such as PM, is used to burn and remove the PM in the exhaust gas.

As such a carbon-based material combustion catalyst, is generally used, for example, a noble metal, such as Pt, Pd, Rh, or an oxide thereof. The use of a catalyst made of an expensive noble metal, however, results in high cost, and disadvantageously leads to a problem of depletion of resources. Further, the combustion activity of the PM is insufficient, and thus under a normal operating condition, untreated PM may be gradually accumulated. In order to remove the accumulated PM, it is necessary to increase the temperature of exhaust gas using fuel, or to electrically heat the catalyst up to 600 °C or more. As a result, sulfur dioxide contained in the exhaust gas is transformed to sulfur trioxide or sulfuric acid mist, and thereby purification of the exhaust gas may not be performed completely even when the PM can be removed.

For the above described reason, catalysts having catalytic particles made of alkali metal oxides, such as potassium, and supported on oxide ceramic particles have been developed (see patent documents 1 to 4). By supporting of such alkali metal, the suspended particulate matter (PM) in the exhaust gas can be burned and removed at a low temperature about 400 °C.

In the catalyst made of alkali metal, however, the alkali metal, which is a catalytic component, may be eluted in the presence of water. When the catalyst is used in an environment including much vapor, for example, in the exhaust gas of the engine, purification of the exhaust gas may not be performed stably for a long time. When an excess amount of alkali metal is used taking into consideration the elution of the alkali metal in order to prevent reduction in catalytic activity, damage may be caused to a base made of ceramic or the like for supporting the alkali metal.
Patent Document 1: JP-A-2001-170483
Patent Document 2: JP-A-2005-230724
Patent Document 3: JP-A-2005-296871
Patent Document 4: JP-A-2005-342604

### DISCLOSURE OF THE INVENTION

The invention has been made in view of the forgoing problems, and it is an object of the invention to provide a carbon-based material combustion catalyst that can cause carbon-based material to be stably burned and removed at low temperature for a long time, a method of manufacturing the combustion catalyst, a catalyst carrier, and a method of manufacturing the catalyst carrier.

According to a first example of the invention, a method of manufacturing a carbon-based material combustion catalyst is provided. The combustion catalyst is adapted for burning a carbon-based material contained in an exhaust gas from an internal combustion engine, while being supported on a ceramic substrate. The manufacturing method includes a step of mixing an aluminosilicate having an atomic equivalent ratio of Si/Al ≥ 1, and an alkali metal source and/or an alkaline earth metal source in water, a step of drying a liquid mixture by heating the mixture after the mixing step to evaporate water thereby obtaining a solid, and a step of burning the solid at a temperature of 600 °C or more thereby to obtain the carbon-based material combustion catalyst. In the manufacturing method of the carbon-based material combustion catalyst, the aluminosilicate is zeolite except for sodalite. In the mixing step, the total amount of an alkali metal element and an alkaline earth metal element contained in the alkali metal source and/or alkaline earth metal source is not less than 0.1 mol and not more than 2.0 mol with respect to 1 mol of a Si element of the aluminosilicate.

According to a second example of the invention, the carbon-based material combustion catalyst is produced by the manufacturing method of the first embodiment.

In the manufacturing method of the first example of the invention, the mixing step, the drying step, and the burning step are performed to manufacture the carbon-based material combustion catalyst.

That is, in the mixing step, the aluminosilicate, which can be zeolite except for sodalite, having the atomic equivalent ratio of Si/Al ≥ 1, and the alkali metal source and/or an alkaline earth metal source are mixed in water. At this time, the mixing is performed such that the total amount of the alkali metal element and the alkaline earth metal element contained in the alkali metal source and/or alkaline earth metal source is not less than 0.1 mol and not more than 2.0 mol with respect to 1 mol of a Si element of the aluminosilicate.

Then, in the drying step, the liquid mixture after the mixing step is heated to evaporate water, thereby obtaining the solid. This can obtain the solid consisting of a mixture of the alkali metal element and/or alkaline earth metal element, and the aluminosilicate.

Then, in the burning step, the solid is burned at a temperature of 600 °C or more so as to obtain the carbon-based material combustion catalyst.

The carbon-based material combustion catalyst contains the alkali metal element and/or the alkaline earth metal element. The alkali metal element and/or the alkaline earth metal element has and/or have a combustion promoting effect for carbon-based material or substances, such as PM, in the exhaust gas. Thus, the carbon-based material combustion catalyst can cause the carbon-based material to be burned at low temperature.

Furthermore, the carbon-based material combustion catalyst can hold the alkali metal element and/or the alkaline earth metal element. Thus, the alkali metal element and/or the alkaline earth metal element can be prevented from being eluted in the presence of water.

In the above described manner, the carbon-based material combustion catalyst is not easily eluted in the presence of water. By using the catalyst supported on the substrate made of ceramics or the like, it is not necessary to additionally support the catalyst on the substrate in an excessive amount so as to prevent degradation of the substrate. Thus, the carbon-based material combustion catalyst can stably promote combustion of the carbon-based material for a long time.

The carbon-based material combustion catalyst according to the second example of the invention, obtained by the manufacturing method of the first example of the invention, has the combustion promoting characteristics for carbon-based material contained in the exhaust gas of the internal combustion engine, such as suspended particulate matter (PM) as mentioned above. The above-mentioned carbon-based material combustion catalyst can cause the carbon-based material to be burned at a temperature equal to or lower than that of a conventional noble metal catalyst. Furthermore, the carbon-based material combustion catalyst does not need expensive noble metal element, and thus can be manufactured at low cost.

The carbon-based material combustion catalyst has the catalytic activity that is hardly degraded even in the presence of water. The carbon-based material combustion catalyst supported to the ceramic substrate in use hardly rots the ceramic substrate in the presence of water unlike the conventional alkali metal catalyst, and thus can prevent the degradation of the ceramic substrate.

Thus, the carbon-based material combustion catalyst can stably promote the combustion of the carbon-based material for a long time even in the presence of water.

The reason why the carbon-based material combustion catalyst has excellent catalytic activity as mentioned above is not clear, but it is thought that the alkali metal element of the alkali metal source which is a raw material, and the alkaline earth metal element of the alkaline earth metal source contribute to the catalytic activity.

Furthermore, it is thought that the carbon-based material combustion catalyst structure holds therein the alkali metal element and/or the alkaline earth metal element by a relatively strong connecting force. Thus, the carbon-based material combustion catalyst can make it difficult for the alkali metal element and/or alkaline earth metal element to be eluted even in the presence of water, and thus can prevent the degradation of the catalytic activity as mentioned above as well as the corrosion of the ceramic substrate.

In the first example of the invention, the carbon-based material combustion catalyst is obtained by the burning step which involves burning the mixture (solid) consisting of the aluminosilicate (zeolite) and the alkali metal source and/or alkaline earth metal source at a temperature of 600 °C or more. The carbon-based material combustion catalyst obtained in the above-mentioned burning step is used while being supported on the ceramic substrate. That is, the burning step is performed without supporting the mixture on the ceramic substrate, and the supporting of the catalyst on the ceramic substrate is performed after the burning step.

When the mixture of the zeolite and the alkali metal source and/or alkaline earth metal source is burned at a temperature of 600 °C or more after being supported on the ceramic substrate, the alkali metal of the alkali metal source and/or the alkaline earth metal or the like of the alkaline earth metal source may be eluted. The alkali metal and/or alkaline earth metal eluted may partly change the structure of the ceramic substrate consisting of, for example, cordierite, thereby resulting in a decrease in thermal expansion coefficient and strength to cause cracks or the like in the ceramic substrate.

In the first example of the invention, as mentioned above, the carbon-based material combustion catalyst subjected to the burning step is used to be supported on the ceramic substrate. Such a combustion catalyst strongly holds the alkali metal element and/or alkaline earth metal element. Thus, when the combustion catalyst is supported on the ceramic substrate, it can prevent the alkali metal and/or alkaline earth metal from being eluted from the combustion catalyst by heating in or after the supporting. As a result, the occurrence of cracks or the like can be prevented in the ceramic substrate.

In the first example of the invention, the mixing step, the drying step, and the burning step can easily manufacture the carbon-based material combustion catalyst. That is, the aluminosilicate (zeolite), and the alkali metal source and/or the alkaline earth metal source are mixed in water and dried to obtain a mixture (solid), which is then burned at a temperature of 600 °C or more. This can easily obtain the carbon-based material combustion catalyst.

In the above described manner, according to the first and second examples of the invention, the carbon-based material combustion catalyst and the manufacturing method thereof can be provided such that carbon-based material can be stably burned and removed at a low temperature for a long time.

In a third example of the invention, there is provided a method of manufacturing a catalyst carrier which is adapted to support the carbon-based material combustion catalyst on the ceramic substrate. The combustion catalyst is used for burning carbon-based material contained in the exhaust gas of the internal combustion engine. The manufacturing method includes a supporting step of supporting the carbon-based material combustion catalyst obtained by the manufacturing method of the first example of the invention on the ceramic substrate, thereby obtaining the catalyst carrier.

In a fourth example of the invention, the catalyst carrier is obtained by the manufacturing method according to the third example of the invention.

The catalyst carrier according to the fourth example of the invention, obtained by the manufacturing method of the third example of the invention, supports the carbon-based material combustion catalyst of the second example of the invention, obtained by the manufacturing method of the first example of the invention, on the ceramic substrate.

Thus, the catalyst carrier can exhibit the excellent action and effect of the carbon-based material combustion catalyst mentioned above. That is, the catalyst carrier can be adapted to stably burn and remove the carbon-based material at a low temperature for a long time. The catalyst carrier does not always need expensive noble metal element in manufacturing, and thus can be manufactured at low cost.

The above-mentioned carbon-based material combustion catalyst can prevent the elution of the alkali metal and/or alkaline earth metal that may rot the ceramic substrate in the presence of water. Thus, the catalyst carrier can cause the carbon-based material to be stably burned for a long time without rotting the ceramic substrate even in the presence of water.

In the third example of the invention, the manufacturing method of the catalyst carrier uses the carbon-based material combustion catalyst obtained by the burning step of the first example of the invention. In the burning step, the mixture (solid) of the aluminosilicate (zeolite) and the alkali metal source and/or alkaline earth metal source are burned at a temperature of 600 °C or more. The manufacturing method of the catalyst carrier includes the step of supporting the carbon-based material combustion catalyst on the ceramic substrate thereby to obtain the catalyst carrier. As mentioned above, the combustion catalyst obtained through the above-mentioned burning step strongly holds the alkali metal element and/or alkaline earth metal element. Thus, in the supporting step, the alkali metal and/or alkaline earth metal can be prevented from being eluted from the carbon-based material combustion catalyst. As a result, it can prevent the occurrence of cracks or the like in the ceramic substrate due to the eluted alkali metal and/or alkaline earth metal. Even when the catalyst carrier obtained after supporting the catalyst is heated, it is difficult for the alkali metal element and/or alkaline earth metal element to be eluted from the carbon-based material combustion catalyst. Thus, the catalyst carrier can be used stably for a long time.

According to the third and fourth examples of the invention, the catalyst carrier and the manufacturing method thereof can cause the carbon-based material to be stably burned and removed at a low temperature for a long time.

### BEST MODE FOR CARRYING OUT THE INVENTION

Now, preferred embodiments of the invention will be described.

First, a first embodiment of the invention will be described below.

The above-mentioned carbon-based material combustion catalyst is used for burning and removing or the like of carbon-based material. The carbon-based material described above includes, for example, carbon fines (e.g., particulate matter, PM) or the like contained in an exhaust gas of a diesel engine.

The above-mentioned manufacturing method according to the first embodiment of the invention includes the mixing step, the drying step, and the burning step.

In the mixing step according to the first embodiment of the invention, an aluminosilicate having an atomic equivalent ratio of Si/Al ≥ 1, and an alkali metal source and/or an alkaline earth metal source are mixed in water. At this time, the aluminosilicate and alkali metal source and/or alkaline earth metal source are preferably mixed so as to be dispersed uniformly.

For the atomic equivalent ratio of Si/Al ∠ 1, the carbon-based material combustion catalyst obtained may allow the alkali metal element and/or alkaline earth metal element to be easily eluted in the presence of water. As a result, the above-mentioned carbon-based material combustion catalyst may have a difficulty in stably maintaining catalytic activity for a long time.

Specifically, in the first embodiment of the invention, zeolite, except for sodalite, is used as the above-mentioned aluminosilicate.

The zeolite is generally represented by a general formula M_{2/n}O·Al₂O₃·ySiO₂·zH₂O (here, M is at least one element selected from the group consisting of the group consisting of Na, K, and H, where y ≥ 2, z ≥ 0). In the mixing step, the zeolite represented by the above general formula can be used.

In the mixing step, the zeolite in which an amount of SiO₂ is less than 200 mol with respect to 1 mol of Al₂O₃ in the composition of the aluminosilicate is preferably used as the aluminosilicate.

That is, the above-mentioned aluminosilicate (zeolite) used is preferably one in which the ratio (molar ratio SiO₂/Al₂O₃) of SiO₂ to Al₂O₃ in the zeolite composition is less than 200, i.e., zeolite in which the y value in the general formula M_{2/n}O·Al₂O₃·ySiO₂·zH₂O satisfies the relationship of y ∠ 200.

Zeolite in which the amount of SiO₂ is equal to or more than 200 mol with respect to 1 mol of Al₂O₃ of the zeolite composition, that is, zeolite in which the y value in the above-mentioned general formula satisfies the relationship of y ≥ 200 is the so-called high silica zeolite. The use of such zeolite may reduce the effect of improvement in combustion promoting characteristics for the carbon-based material by the above burning step.

Furthermore, for example, a LTA type, a FAU (phage site) type, a MOR type, a LTL type, a FER type, a MFI type, and a BEA type zeolite can be adopted as the zeolite.

In the mixing step, the above-mentioned aluminosilicate (zeolite), the alkali metal source (zeolite), and/or the alkaline earth metal source are mixed in water to obtain a mixed liquid.

The alkali metal source includes, for example, a compound of alkali metal or the like. The alkaline earth metal source includes, for example, a compound or the like of alkaline earth metal.

The alkali metal element source contains one or more kinds of elements selected from the group consisting of Na, K, Rb, and Cs. The alkaline earth metal element preferably contains one or more kinds of elements selected from the group consisting of Mg, Ca, Sr, and Ba.

In this case, it is possible to obtain the carbon-based material combustion catalyst which causes the carbon-based material to be burned at lower temperatures.

The alkali metal source and/or the alkaline earth metal source preferably is, for example, a carbonate, a sulfate, a phosphate, a nitrate, an organic acid salt, a halide, an oxide, or a hydroxide.

In this case, the alkali metal source and/or the alkaline earth metal source can be easily mixed in a polar solvent, such as water. Thus, the alkali metal source and/or the alkaline earth metal source can be mixed uniformly in the mixing step.

More preferably, an alkali metal salt may be used as the alkali metal source, and an alkaline earth metal salt may be used as the alkaline earth metal source.

In this case, the above-mentioned alkali metal source and the alkaline earth metal source have high solubility to the polar solvent, such as water, and thus can be solved in the polar solvent. When the mixing step is performed in the polar solvent, such as water, the aluminosilicate and the alkali metal source and/or the alkaline earth metal source can be mixed uniformly and easily.

In the mixing step, preferably, the aluminosilicate and at least the alkali metal source are mixed.

In this case, the combustion promoting characteristics of the combustion catalyst for the carbon-based material can further be improved.

The alkali metal elements contained in the alkali metal source for use can be, for example, Na, K, Rb, Cs, and the like.

The alkaline earth metal elements contained in the alkaline earth metal source for use can be, for example, Mg, Ca, Sr, Ba or the like.

Preferably, in the mixing step, the alkaline earth metal source containing at least Ba may be used as the alkaline earth metal element.

In this case, the combustion promoting characteristics of the carbon-based material combustion catalyst for the carbon-based material can be further improved as compared to the case of using the alkaline earth metal source containing an alkaline earth metal element other than Ba.

In the mixing step, the alkali metal source and/or the alkaline earth metal source and the aluminosilicate are mixed such that the total amount of the alkali metal element and the alkaline earth metal element contained in the alkali metal source and/or the alkaline earth metal element is not less than 0.1 mol and not more than 2.0 mol with respect to 1 mol of Si element of the aluminosilicate (zeolite).

Preferably, in the mixing step, the alkali metal source and/or the alkaline earth metal source and the aluminosilicate may be mixed such that the total amount of the alkali metal element and the alkaline earth metal element contained in the alkali metal source and/or the alkaline earth metal element is not less than 0.2 mol and not more than 1.5 mol with respect to 1 mol of Si element of the aluminosilicate (zeolite).

When the total amount of the alkali metal element and the alkaline earth metal element is less than 0.1 mol with respect to 1 mol of Si element in the aluminosilicate (zeolite), water resistance of the carbon-based material combustion catalyst may be deteriorated. That is, in the presence of water, the combustion promoting characteristics for the carbon-based material may be easily degraded. For the total amount of the alkali metal element and the alkaline earth metal element exceeding 2.0 mol, the combustion promoting characteristics may be easily degraded in the presence of water, and thus the degree of degradation may be very large.

When the total amount of the alkali metal element and the alkaline earth metal element exceeds 2.0 mol with respect to 1 mol of Si element of the aluminosilicate (zeolite), the mixture may be easily melted in the burning step. Thus, the carbon-based material combustion catalyst obtained after the burning step has once been brought into a melted state, which may result in an increased hardness of the catalyst. In this case, it is difficult to adjust the size of the carbon-based material combustion catalyst to a desired grain size by performing a pulverizing step after the burning step to be described later. In this case, the catalyst may be easily affected by water. Thus, it is difficult to maintain predetermined catalytic activity for a long time.

The total amount of the alkali metal element and the alkaline earth element described above is the total amount of the alkali metal element in the alkali metal source and the alkaline earth element in the alkaline earth metal source contained in the zeolite. When only one of the alkali metal source and the alkaline earth metal source is used, the amount of the other element can be calculated to be 0 mol. When a plurality of alkali metal sources and a plurality of alkaline earth metal sources are used, the total amount of the alkali metal elements and alkaline earth elements can be calculated as the total amount of these sources.

In the mixing step, a polar solvent other than water is used instead of water, and the aluminosilicate, and the alkali metal source and/or alkaline earth metal source are mixed in the polar solvent. Then, in the drying step, the polar solvent can be evaporated to obtain the solid as described above.

Specifically, the above-mentioned polar solvent for use can be alcohol, for example, methanol or ethanol.

A solvent that is more volatile than water is preferably used as the polar solvent.

In this case, in the drying step, the polar solvent can be evaporated more easily.

Then, in the drying step, the liquid mixture obtained after the mixing step is heated to evaporate the water, thereby obtaining the solid. In the first embodiment of the invention, the solid consists of a mixture of the alkali metal element source and/or alkaline earth metal source, and the aluminosilicate (zeolite), for example.

In the burning step, the solid is burned at a temperature of 600 °C or higher. This can obtain the above-mentioned carbon-based material combustion catalyst.

When the burning temperature (maximum temperature at heating) is less than 600 °C in the burning step, the alkali metal element and/or alkaline earth metal element each tends to be easily eluted in the presence of water. Thus, the above-mentioned carbon-based material combustion catalyst may have a difficulty in stably exhibiting the catalytic activity for the carbon-based material for a long time. In the burning step, burning is preferably performed at a burning temperature of 700 °C or more, and more preferably, 800 °C or more.

When the burning temperature exceeds 1200 °C, the solid may be easily melted in the burning step. Thus, the carbon-based material combustion catalyst obtained after the burning step has once been brought into a melted state, and then may have the high hardness. As a result, in this case, it may be difficult to adjust the size of the carbon-based material combustion catalyst to a desired grain size by performing the pulverizing step after the burning step to be described later. Accordingly, in the burning step, the mixture may be preferably burned at a temperature from 700 °C to 1200 °C, and more preferably from 800 °C to 1100 °C.

The term "burning temperature in the burning step" as used herein means the temperature of the solid itself, and not an ambient temperature. Thus, in the burning step, the burning is performed such that the temperature of the solid itself becomes 600 °C or more. In the burning step, the burning at the burning temperature preferably continues for one hour or more, preferably for five hours or more, and more preferably for ten hours or more.

The method preferably includes a pulverizing step for pulverizing the carbon-based material combustion catalyst obtained after the burning step. In this case, the powdered carbon-based material combustion catalyst can be obtained. Such a powdered carbon-based material combustion catalyst is easily supported, for example, on a ceramic substrate having a honeycomb structure or the like. In this case, since the superficial area of the carbon-based material combustion catalyst becomes large, the combustion catalyst can have more excellent catalytic activity.

In the pulverizing step, the carbon-based material combustion catalyst having a desired grain size can be obtained by adjusting a pulverizing condition.

Preferably, in the pulverizing step, the carbon-based material combustion catalyst may have a median diameter adjusted to be equal to or less than 50 µm. In a case where the median diameter exceeds 50 µm, when the ceramic substrate is coated with the carbon-based material combustion catalyst, the ceramic substrate may become clogged, or the amount of supported catalyst may be varied easily. The median diameter of the catalyst may be more preferably equal to or less than 10 µm.

The median diameter of the carbon-based material combustion catalyst can be measured, for example, by a laser diffraction/diffusion grain size distribution measuring device or a scanning electron microscope.

The above-mentioned carbon-based material combustion catalyst is used while being supported on the ceramic substrate.

The above carbon-based material combustion catalyst is obtained by the burning step which involves burning a mixture (solid) of the aluminosilicate (zeolite) and the alkali metal source and/or alkaline earth metal source at a temperature of 600 °C or more. The thus-obtained combustion catalyst structure holds therein the alkali metal element and/or the alkaline earth metal element by a relatively strong connecting force. Thus, the carbon-based material combustion catalyst can make it difficult for the alkali metal and/or alkaline earth metal to be eluted when the catalyst is supported on the ceramic substrate. Further, the combustion catalyst can prevent the ceramic substrate from being degraded due to the alkali metal and the alkaline earth metal eluted.

In contrast, if the mixture not burned is supported on the ceramic substrate, the alkali metal element and/or alkaline earth metal element of the mixture each is eluted in heating upon supporting of the mixture on the ceramic substrate, or after supporting of the mixture thereon. This may degrade the ceramic substrate.

That is, in the first embodiment of the invention, the burning step is performed without supporting the solid on the ceramic substrate, before supporting of the catalyst on the ceramic substrate.

The carbon-based material combustion catalyst (in a second embodiment of the invention) obtained by the manufacturing method of the first embodiment of the invention is used for burning and removing carbon-based material of the carbon fines (PM) or the like contained in the exhaust gas of the internal combustion engine, such as a gasoline engine or a diesel engine.

Now, a manufacturing method of a catalyst carrier in a third embodiment of the invention, and a catalyst carrier in a fourth embodiment of the invention will be described below with reference to the accompanying drawings.

The manufacturing method of the third embodiment of the invention includes a supporting step which involves supporting the carbon-based material combustion catalyst obtained by the manufacturing method of the first embodiment of the invention, on the ceramic substrate thereby to obtain the above-mentioned catalyst carrier (according to a fourth embodiment of the invention).

In the supporting step, preferably, at least the carbon-based material combustion catalyst and sol or slurry oxide ceramic particles are mixed to form a composite material, and the ceramic substrate is coated with the composite material to be heated.

Specifically, the carbon-based material combustion catalyst and, for example, the sol oxide ceramic particles are mixed in first to form the composite material. Water is further added to the composite material, if necessary, thereby to adjust the viscosity of the composite material to an appropriate value. The ceramic substrate is coated with the thus-obtained slurry composite material to be heated.

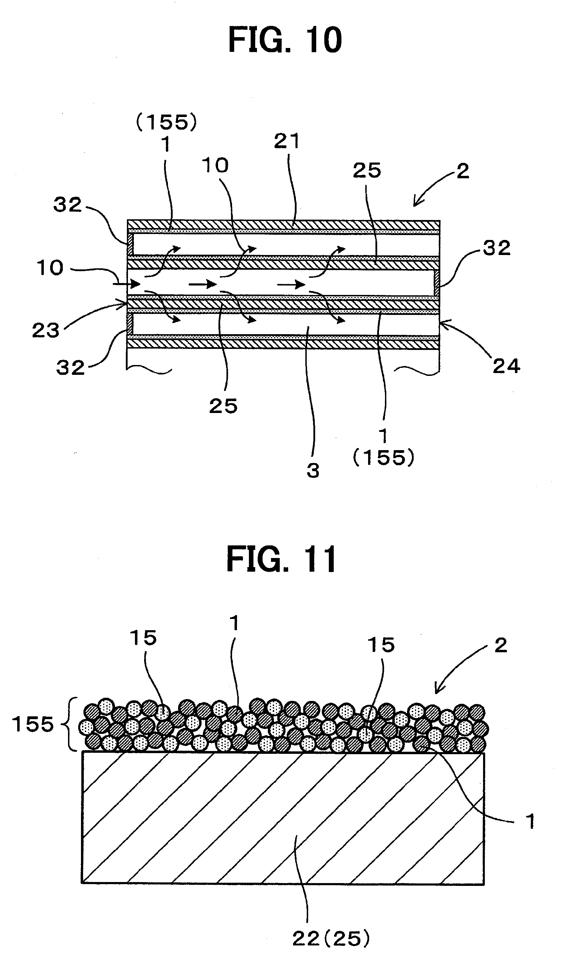

In this case, as shown in Fig. 11, the above-mentioned carbon-based material combustion catalyst 1 and oxide ceramic particles 15 are burned onto a ceramic substrate 22, so as to easily provide a catalyst carrier 2 in which the carbon-based material combustion catalysts 1 are supported on the ceramic substrate 22. A bonding layer 155 including the oxide ceramic particles 15 connected together is formed on the ceramic substrate 22. Thus, the catalyst carrier 2 holding the carbon-based material combustion catalyst 1 dispersed into the bonding layer 155 can be obtained.

The catalyst carrier with such a structure strongly holds the carbon-based material combustion catalyst by the bonding layer. This can make it difficult for the combustion catalyst particles to drop off in use, thereby stably maintaining the catalytic activity.

Preferably, the above-mentioned oxide ceramic particles mainly include one or more elements selected from the group consisting of alumina, silica, titania, and zirconia.

In this case, the bonding layer having a large specific surface area is apt to be formed, so that the superficial area of the catalyst carrier can be increased. As a result, the carbon-based material combustion catalyst is easily brought into contact with the carbon-based material, so that the catalyst carrier can be adapted to more effectively burn the carbon-based material.

The ceramic substrate for use can be a base mainly consisting of, for example, cordierite, alumina, aluminum titanate, Sic, or titania.

As the ceramic substrate can be used a base having, for example, a pellet-like shape, a filter-like shape, a form-like shape, or a flow through type monolith shape.

Preferably, the ceramic substrate may consist of cordierite, SiC, or aluminum titanate. Preferably, the ceramic substrate may have a honeycomb structure. In such cases, the catalyst carrier can be more suitably used for purification of the exhaust gas.

The honeycomb structure includes an outer peripheral wall, partition walls provided in the form of honeycomb inside the outer peripheral wall, and a plurality of cells partitioned by the partition walls and penetrating both ends of the structure. The honeycomb structure for use can be a structure in which all cells are opened to both ends. Alternatively, the honeycomb structure for use can be another structure in which parts of cells are opened to both ends of the structure and the remaining cells are closed by stoppers formed on the both ends.

The catalyst carrier can support not only the above-mentioned carbon-based material combustion catalyst, but also one or more kinds of rare-earth elements on the ceramic substrate. The rare-earth elements for use can be, for example, Ce, La, Nd, and the like. Oxide particles of the rare-earth elements can be used as the above-mentioned rare-earth element.

In this case, a change in state of the rare-earth element causes absorption and desorption of oxygen, which can further promote the combustion of the carbon-based material.

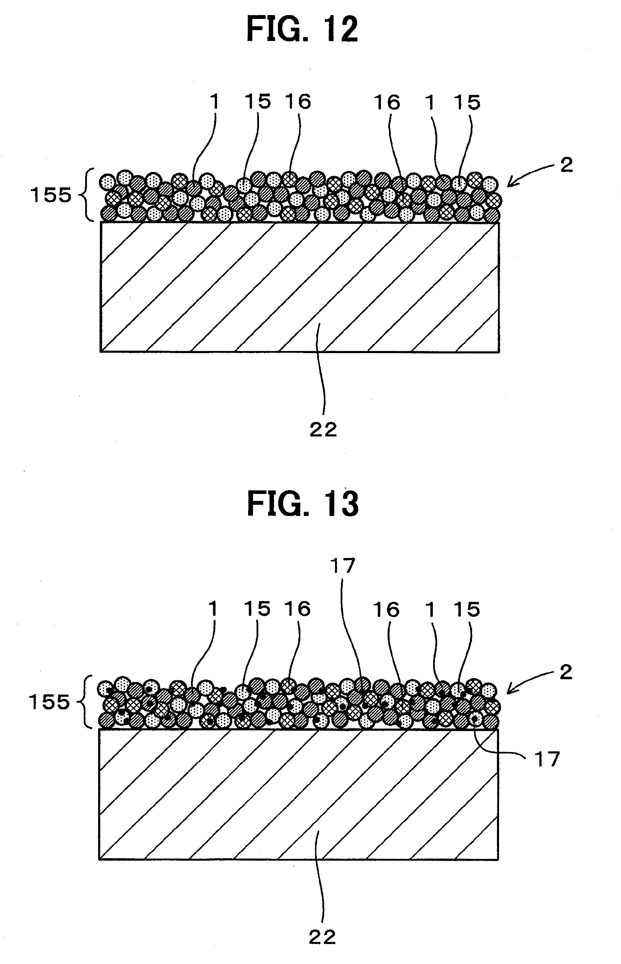

Fig. 12 shows an example of the catalyst carrier 2 supporting the particulates of the carbon-based material combustion catalyst 1 and the rare-earth elements 16 on the substrate 22. Such a catalyst carrier 2 is obtained by mixing the carbon-based material combustion catalyst 1, the rare-earth elements 16, and the oxide ceramic particles 15, further adding water to the mixture if necessary to adjust the mixture to an appropriate viscosity, and burning the thus-obtained slurry composite material onto the ceramic substrate 22. In this case, the bonding layer 155 including the oxide ceramic particles connected together is formed on the ceramic substrate 22. Thus, the catalyst carrier 2 in which the combustion catalyst 1 and the rare-earth element 16 dispersed in the bonding layer 155 are supported on the ceramic substrate 22 can be obtained.

The catalyst carrier can support not only the carbon-based material combustion catalyst, but also noble metal if necessary. In this case, the catalytic activity of the catalyst carrier for the carbon-based material can be further improved. Moreover, in this case, since the carbon-based material combustion catalyst has the excellent catalyst activity, the amount of supported noble metal, which is relatively expensive, can be drastically decreased as compared to the conventional case. The noble metals are, for example, Pt, Pd, Rh, and the like.

Fig. 13 shows an example of a catalyst carrier 2 in which the particles of the carbon-based material combustion catalyst 1, the rare-earth elements 16, and the particles of a noble metal 17 are dispersed into a bonding layer 155 including the oxide ceramic particles 15 connected together. Such a catalyst carrier 2 can be obtained by mixing the carbon-based material combustion catalyst 1, the rare-earth elements 16, for example, the sol oxide ceramic particles 15 or the like, and a noble metal complex, by further adding water to the mixture if necessary to adjust the mixture to the appropriate viscosity, and by burning the thus-obtained slurry composite material onto the ceramic substrate 22.

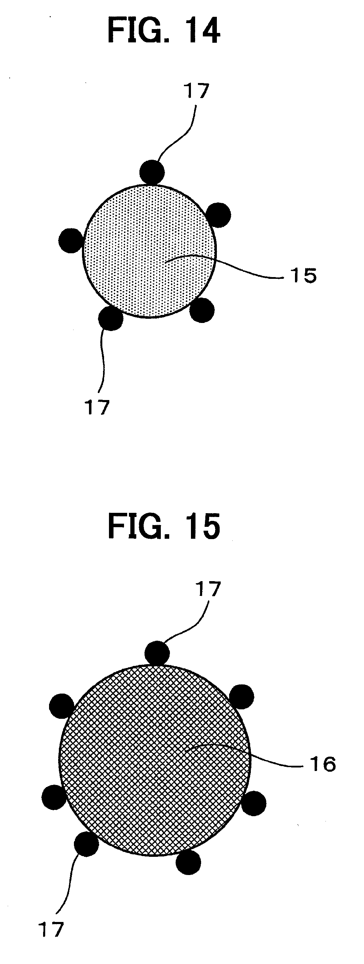

As shown in Fig. 14, the noble metal 17 is preferably supported on the oxide ceramic particles 15. When oxide particles 16 of the rare-earth element are contained, as shown in Fig. 15, the noble metal 17 is preferably supported on the oxide particle 16 made of the rare-earth element.

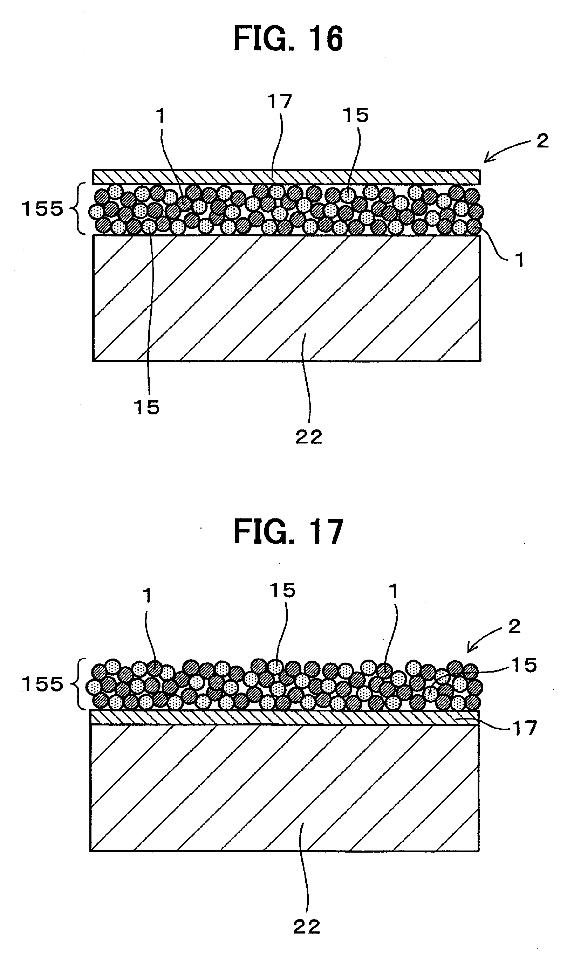

The above-mentioned catalyst carrier can have a noble-metal layer 17 made of noble metal and formed as shown in Figs. 16 and 17.

As shown in Fig. 16, the noble metal layer 17 can be formed on the bonding layer 155 including the carbon-based material combustion catalyst 1 supported on the ceramic substrate 22. That is, the bonding layer 155 including the carbon-based material combustion catalyst 1 is formed on the ceramic substrate 22, and the noble metal layer 17 can be formed on the bonding layer 155.

In this case, poisoning of the alkali metal and/or alkaline earth metal of the carbon-based material combustion catalyst 1 can be prevented at the catalyst carrier.

As shown in Fig. 17, the noble metal layer 17 can be formed between the ceramic substrate 22 and the bonding layer 155 containing the carbon-based material combustion catalyst 1. That is, the noble metal layer 17 can be formed directly on the ceramic substrate 22, and the bonding layer 155 containing the combustion catalyst 1 can be formed on the noble metal layer 17.

In this case, the alkali metal and/or alkaline earth metal of the carbon-based material combustion catalyst 1 can be prevented from moving to the ceramic substrate 22 made of ceramics. This can further prevent the corrosion of the ceramic substrate 22.

### EXAMPLES OF THE EMBODIMENTS

### (Example 1)

Next, the invention will be described below based on the following examples.

In the present example, the carbon-based material combustion catalyst used for burning and removing the carbon-based material contained in the exhaust gas from the internal combustion engine is manufactured to study the combustion promoting characteristics for the carbon-based material (carbon).

In the present example, the carbon-based material combustion catalyst is manufactured by performing a mixing step, a drying step, and a burning step.

In the mixing step, the aluminosilicate (zeolite) having the atomic equivalent ratio of Si/Al ≥ 1, the alkali metal source containing one or more kinds of alkali metal elements, and/or the alkaline metal source containing one or more kinds of alkaline metal elements are mixed in water in the following way. That is, the total amount of the alkali metal element and the alkaline earth metal element contained in the alkali metal source and/or the alkaline earth metal source is not less than 0.1 mol and not more than 2.0 mol with respect to 1 mol of Si element of the aluminosilicate. In the drying step, the liquid mixture after the mixing step is heated to evaporate the water, thereby obtaining a solid.

In the burning step, the solid is burned at a temperature of 600 °C or more to obtain the carbon-based material combustion catalyst.

Specifically, in first, a LTA type zeolite ("A-3" manufactured by Tosoh Corporation) having a ratio (SiO₂/Al₂O₃) of 2.0 mol of SiO₂ with respect to 1 mol of Al₂O₃ was prepared as the aluminosilicate having the atomic equivalent ratio of Si/Al ≥ 1. Potassium carbonate was prepared as the alkali metal source.

Next, the zeolite and the potassium carbonate were introduced and mixed into water such that a ratio of an amount of K of the potassium carbonate to 1 mol of the Si element of the zeolite is 0.225 mol. Then, the liquid mixture was heated at a temperature of 120 °C to evaporate the water, thereby obtaining the solid (mixture).

Then, the solid was burned at a temperature of 1000 °C. Specifically, the solid is heated at a temperature increasing speed of 100 °C/hr. After the temperature of the solid reaches 1000 °C (burning temperature), the solid is maintained for 10 hours thereby to be subjected to the burning step.

Thereafter, the thus-obtained burned material is pulverized so as to have a median diameter of 10 µm or less and a maximum grain size of 100 µm or less, thereby obtaining the carbon-based material combustion catalyst. The material so obtained was referred to as a "specimen E1".

Next, the combustion promoting characteristics for the carbon-based material of the carbon-based material combustion catalyst (specimen E1) manufactured in the present example were examined. As a comparative example, combustion promoting characteristics of a noble metal-based catalyst (Pt powder), and potassium carbonate powder were examined.

Specifically, in first, 200 mg of the catalyst species (the specimen E1, the noble metal-based catalyst, or the potassium carbonate powder) and 20 mg of carbon black (CB) were respectively measured accurately by an electronic balance. These catalyst species were combined for a certain time using an agate mortar such that the ratio of the catalyst species (weight) to CB (weight) is 10 : 1, and thereby three kinds of evaluation samples containing the catalyst species and carbon black were obtained. An evaluation sample consisting of singly CB was manufactured without using the catalyst species as a conventional evaluation sample. The evaluation sample simply using the CB was one after being mixed for a certain time using the agate mortar, like the other samples. That is, the evaluation samples manufactured were four kinds of samples, namely, a single CB sample, a mixture of a noble metal-based catalyst and CB, a mixture of the specimen E1 and CB, and a mixture of potassium carbonate and CB.

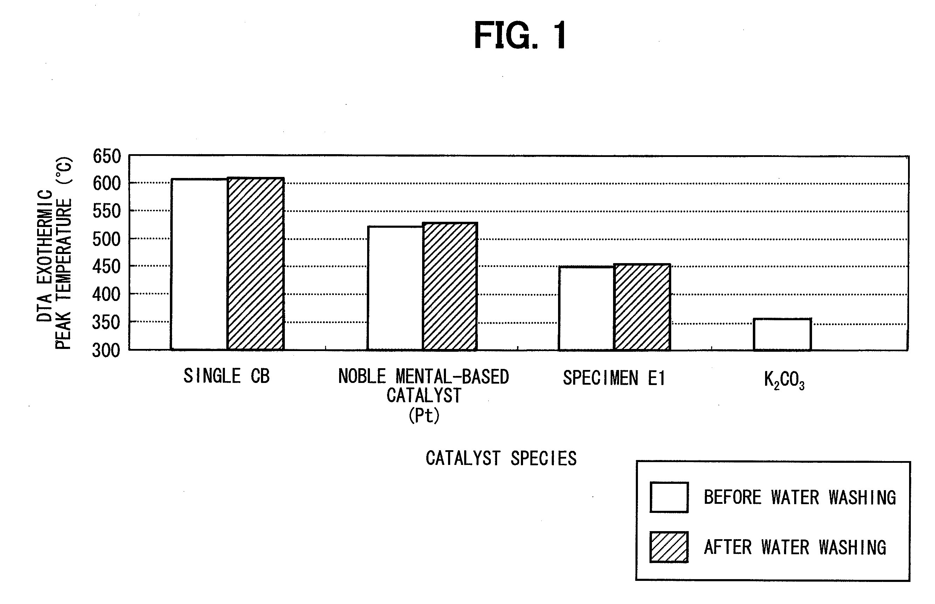

Then, 6mg of each evaluation sample was heated up to the maximum temperature of 900 °C at the temperature increasing rate of 10 °C/min thereby to burn the CB. At this time, a DTA exothermic peak temperature of each evaluation sample was measured using a thermal analysis - differential thermogravimetric (TG-DTA) simultaneous measurement device ("TG8120" manufactured by Rigaku Industrial Co. Ltd). The DTA exothermic peak temperature of the 0.5 mg of the evaluation sample consisting of only CB was measured. Heating was executed by allowing the air to flow through the evaluation sample at a flow rate of 50 ml/min. Fig. 1 shows measurement results of the DTA exothermic peak temperatures in use of the respective catalyst species.

Furthermore, 1 g of each of the catalyst species (the specimen E1, the noble metal-based catalyst, and the potassium carbonate powder) was introduced into 500 cc of water, and stirred night and day thereby to be washed. Then, the catalyst species after washing by water were filtered. The filtered catalyst species were sufficiently washed by allowing 1500cc of water to flow therethrough, and then dried. Thereafter, 200mg of each of the catalyst species (the specimen E1, and the noble metal-based catalyst) after the water washing process and 20mg of the carbon black (CB) were accurately measured by the electronic balance. Each of the catalyst species and the carbon black were mixed for a certain time using the agate mortar such that the ratio of the catalyst species (weight) to CB (weight) is 10 : 1, and thereby two kinds of evaluation samples containing the catalyst species and carbon black were obtained. The evaluation sample made of the single CB was washed, dried, and then mixed using the agate mortar, like the other samples. The evaluation sample using the potassium carbonate as the catalyst species was dissolved in water by the water washing process, and thus the following process was not able to be performed. That is, the evaluation samples after the water washing include three types of samples, namely, the single CB sample, the mixture of the noble metal-based catalyst and the CB, and the mixture of the specimen E1 and the CB. The DTA exothermic peak temperature of each evaluation sample was measured again using the thermal analysis-differential thermogravimetric (TG-DTA) simultaneous measurement device. Fig. 1 shows the results of the DTA exothermic peak temperatures of the respective evaluation samples after the water washing.

As can be seen from Fig. 1, the sample using the specimen E1 and the sample using the potassium carbonate before the water washing each have a low DTA exothermic peak temperature, thus causing the carbon-based material (CB) to be burned at a relatively low temperature. From Fig. 1, it can be seen that the specimen E1 has the DTA exothermic peak temperature of about 410 °C (before the water washing), but the combustion of carbon black is actually started even at a lower temperature (for example, 360 °C) than this.

As can be seen from Fig. 1, the single CB sample, the noble metal-based catalyst, and the specimen E1 hardly change the combustion promoting characteristics for the CB before and after the water washing. Among them, the specimen E1 has the largest amount of decrease in combustion promoting characteristic after the water washing. However, the DTA exothermic peak temperature of the specimen E1 after the water washing is about 450 °C, which is sufficiently low as compared to those of the single CB sample and the noble metal-based catalyst. Accordingly, it shows that the specimen E1 exhibits the excellent combustion promoting characteristics for the carbon-based material also after the water washing.

In contrast, in the sample using the potassium carbonate, the potassium carbonate is dissolved into water after the water washing, and thus the DTA exothermic peak temperature of this sample cannot be measured.

Thus, the specimen E1 has the excellent combustion promoting characteristic for the carbon-based material, and can cause the carbon-based material to be burned and removed at a low temperature. Further, the specimen E1 can maintain the excellent characteristics in the presence of water, and thus can stably burn the carbon-based material for a long time. The specimen E1 does not need expensive noble metal or the like in manufacturing, resulting in a low manufacturing cost.

### (Example 2)

In the present example, the carbon-based material combustion catalysts are manufactured using a plurality of zeolites with different compositions as aluminosilicate to examine the combustion promoting characteristics for the carbon-based material before and after the water washing.

The carbon-based material combustion catalyst in the present example can be manufactured by the same mixing and burning steps as those of the specimen E1 except for changing the kind of zeolite.

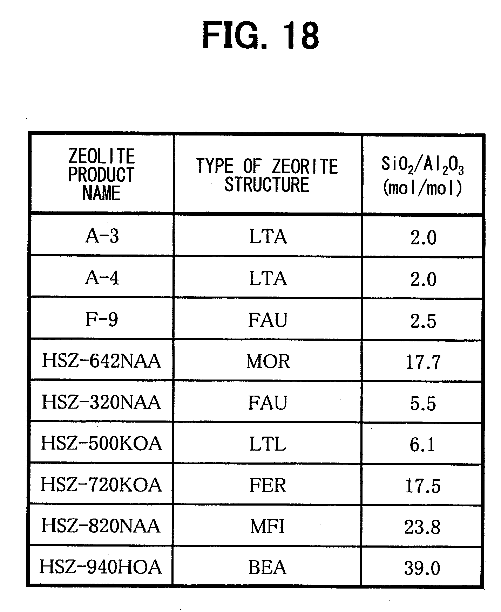

Specifically, first, nine kinds of zeolites with different ratios of SiO₂/Al₂O₃ (mol ratios) in the composition and/or the structure including the zeolite used for manufacturing of the specimen E1 ("A-3" manufactured by Tosoh Corporation) were prepared. These zeolites have the structure of any one of the LTA type, the BEA type, the FAU type, the FER type, the LTL type, the MFI type, and the MOR type (see Fig. 18), each of which is the zeolite manufactured by Tosoh Corporation.

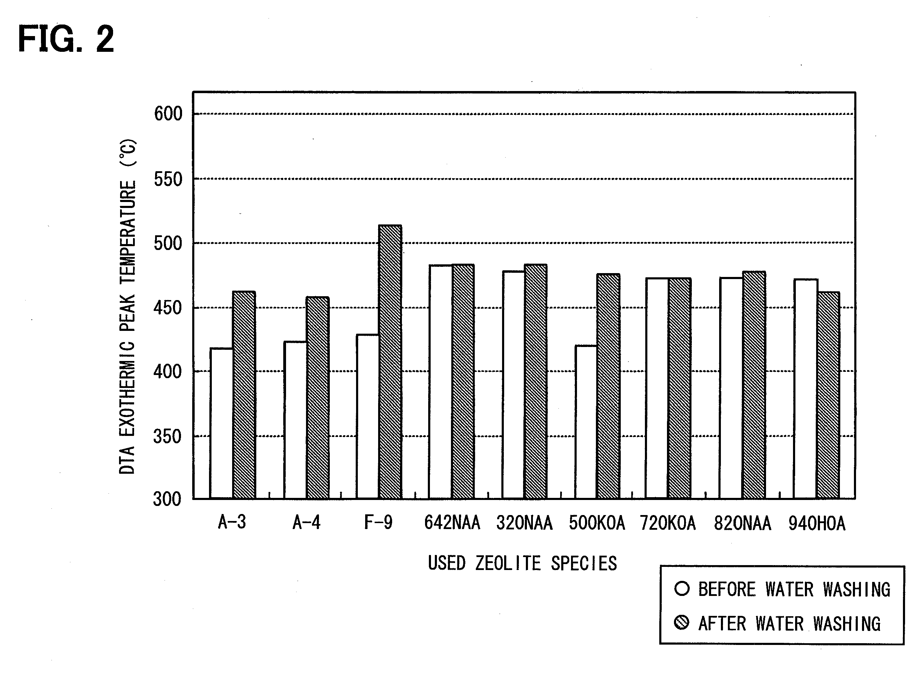

Fig. 18 shows a product name of each zeolite (by Tosoh Corporation), the type of zeolite structure, and the ratio of SiO₂/Al₂O₃. The product names shown in Figs. 18 and 2 correspond to those of zeolites manufactured by Tosoh Corporation.

Then, various types of zeorites and potassium carbonate were respectively mixed. The mixing was performed in water to evaporate the water in the liquid mixture in the same way as in Example 1, thereby obtaining the solid. The mixing ratio of each type of zeolite to the potassium carbonate was set in the same manner as in Example 1, such that the amount of K of the potassium carbonate with respect to 1.0 mol of a Si element in each type of zeolite was 0.255 mol.

Specifically, each solid is heated at a temperature increasing rate of 100 °C/hr. After the temperature of the solid reaches 1000 °C (burning temperature), the solid is maintained for 10 hours thereby to perform the burning step.

Thereafter, the thus-obtained burned material is pulverized so as to have a median diameter of 10 µm or less and a maximum grain size of 100 µm or less, thereby obtaining the carbon-based material combustion catalyst.

By the use of various types of zeolites shown in Fig. 18, nine kinds of carbon-based material combustion catalysts are manufactured. The combustion promoting characteristics of theses carbon-based material combustion catalysts before and after the water washing were examined in the same way as the above-mentioned specimen E1 of Example 1. Fig. 2 shows the results thereof.

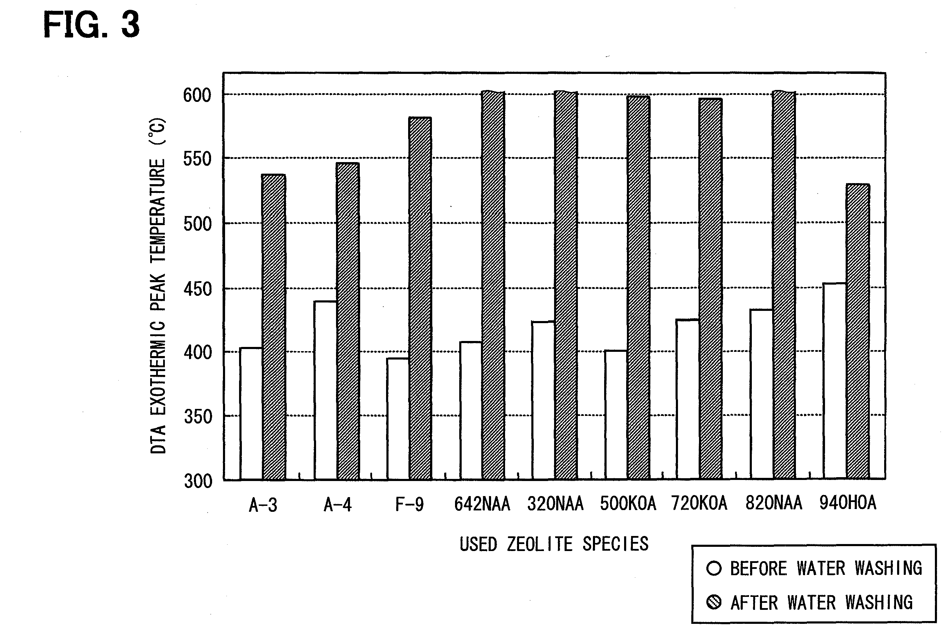

In the present example, in order to examine the significance of the burning step, the solid before the burning step, that is, the mixture of each type of zeolite and the potassium carbonate was used as the catalyst, and the combustion promoting properties for the carbon-based material before and after the water washing were examined in the same way as the above-mentioned specimen E1 of Example 1. Fig. 3 shows the results thereof.

As can be seen from Fig. 2, in use of any one of the zeolites, the carbon-based material combustion catalyst each exhibited the low DTA exothermic peak temperature of about 480 °C or less before the water washing. The temperature value is sufficiently small as compared to the noble metal-based (Pt) catalyst (whose DTA exothermic peak temperature is about 520 °C (see Fig. 1)) generally used as the carbon-based material combustion catalyst. Thus, it is clear that the carbon-based material combustion catalyst manufactured by use of each type of zeolite has the excellent combustion promoting characteristics for the carbon-based material, and can cause the carbon-based material to be burned and removed at a low temperature.

As can be seen from Fig. 2, the carbon-based material combustion catalyst manufactured using each type of zeolite exhibits the DTA exothermic peak temperature that is equal to or smaller than that of the noble metal (Pt) catalyst, whose DTA exothermic peak temperature is about 520 °C (see Fig. 1), even after the water washing. Accordingly, it shows that the carbon-based material combustion catalyst can maintain the excellent combustion promoting characteristics for the carbon-based material in the presence of water.

As can be seen from Fig. 3, the mixture of each type of zeolite and the potassium carbonate before the burning step has a very low DTA exothermic peak temperature before the water washing. However, any one of the mixtures has the DTA exothermic peak temperature drastically increased after the water washing.

In contrast, after the burning step, the increase in DTA exothermic peak temperature becomes small after the water washing as mentioned above (see Fig. 2). Thus, the burning step can be performed to burn the mixture (the above-mentioned solid), thereby improving resistance to water.

As mentioned above, in the present example, the mixing step and the burning step are performed using a plurality of zeolites with different compositions, thereby providing the carbon-based material combustion catalyst that can be used to stably burn and remove the carbon-based material at a low temperature in the presence of water for a long time.

### (Comparative Example 1)

In the present example, a plurality of zeolites having different SiO₂/Al₂O₃ ratios and the same structure as that in Example 2 were prepared. When a burned material obtained by singly burning the zeolite is used as the catalyst, the combustion promoting characteristics of the catalyst for the carbon-based material were examined.

In the present example, the zeolite is singly burned without being mixed with the alkali metal source, such as potassium carbonate, or the alkaline earth metal source.

Specifically, nine kinds of the zeolites were prepared similarly to Example 2 (see Fig. 18) in first.

Then, theses zeolites were heated at the temperature increasing ratio of 100 °C/hr. After the temperature of the solid reaches 1000 °C (burning temperature), the zeolite is maintained for 10 hours thereby to perform the burning.

Next, the thus-obtained burned material was pulverized so as to have a median diameter of 10 µm or less and a maximum grain size of 100 µm or less.

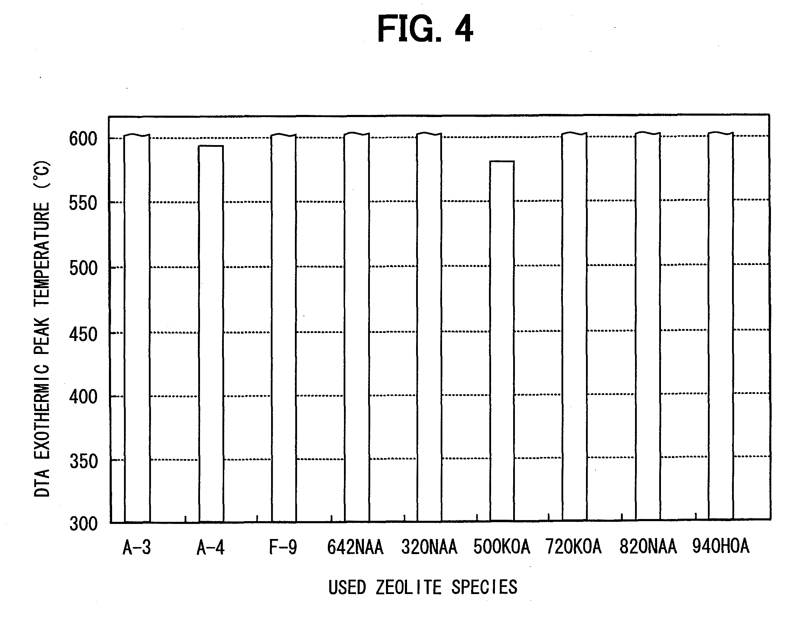

Nine kinds of burned materials (catalysts) were manufactured using various kinds of zeolites shown in Fig. 18. The combustion promoting characteristics of the catalysts for the carbon-based material were examined in the same manner as that of the specimen E1 of Example 1. The evaluation of the combustion promoting characteristics after the water washing, which was performed in Example 1, was not performed in the present example. Fig. 4 shows the result of the combustion promoting characteristics.

As can be seen from Fig. 4, the burned material formed by singly burning the zeolite has the high DTA exothermic peak temperature and does not have the sufficient combustion promoting characteristics for the carbon-based material even in use of any one of the zeolites. In contrast, in Example 2, when each of various zeolites and the alkali metal source are mixed to be burned, the DTA exothermic peak temperature is drastically decreased (see Fig. 3).

Thus, according to this example, in order to obtain the carbon-based material combustion catalyst having the sufficient activity, it is necessary to burn the mixture of the zeolite and the alkali metal source.

### (Example 3)

In the present example, an influence of the burning temperature in the burning step on the catalyst activity was examined.

That is, in the present example, the mixture of zeolite and potassium carbonate is burned at different burning temperatures to manufacture a plurality of carbon-based material combustion catalysts. The combustion promoting characteristics of these carbon-based material combustion catalysts are examined.

The carbon-based material combustion catalysts in the present example were manufactured by the same mixing and burning steps as those in Example 1, except for a changing step of the burning temperature.

Specifically, first, a mixture (the above-mentioned solid) of potassium carbonate and the LTA type zeolite having the ratio of SiO₂/Al₂O₃ (mol ratio) of 2.0 ("A-3" manufactured by Tosoh Corporation) was obtained in the same manner as in Example 1. Also, in the present example, like Example 1, the mixing was performed in water. Furthermore, the mixing ratio of the potassium carbonate to the zeolite was set like Example 1 such that a K amount of the potassium carbonate is 0.225 mol with respect to 1 mol of a Si element of the zeolite.

Then, the mixture was burned at different burning temperatures to manufacture a plurality of catalysts.

Specifically, the mixture was burned at different burning temperatures, for example, 500 °C, 600 °C, 800 °C, 700 °C, 900 °C, 1000 °C, 1100 °C, 1200 °C, and 1300 °C. The burning was performed by setting the burning velocity to 100 °C/h and keeping the mixture at each burning temperature for 10 hours. Thereafter, the thus-obtained burned material is pulverized so as to have a median diameter of 10 µm or less and a maximum grain size of 100 µm or less, thereby obtaining nine kinds of catalysts burned at the different temperatures.

The combustion promoting characteristics before and after water washing of nine kinds of the carbon-based material combustion catalysts were examined in the same way as the specimen E1 of Example 1. In a comparative example, the combustion promoting characteristics for carbon-based materials of the mixture of zeolite (A-3) and potassium carbonate were examined. The mixture of the zeolite and the potassium carbonate for use was left for about 10 hours at room temperature (at about 25 °C) instead of burning.

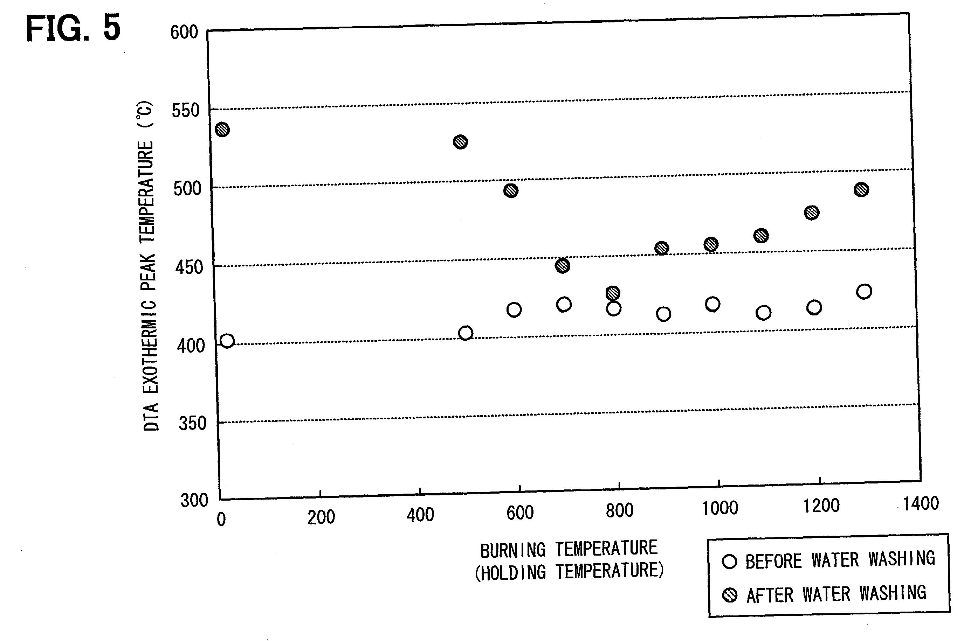

The measurement of the combustion promoting characteristics was performed by measuring the DTA exothermic peak temperature in the same manner as the specimen E1 of Example 1. Fig. 5 shows the result thereof.

As can be seen from Fig. 5, the carbon-based material combustion catalyst manufactured by burning at a temperature of 600 °C or more had the DTA exothermic peak temperature below 500 °C before and after the water washing. The noble metal (Pt) catalyst is generally used as the combustion catalyst for the carbon-based material. The DTA exothermic peak temperature of the noble metal catalyst is about 520 °C (see Fig. 1). Thus, it can be seen that such a carbon-based material combustion catalyst has the sufficiently excellent combustion promoting characteristics for the carbon-based material.

In contrast, as can be seen from Fig. 5, the catalyst burned at a temperature below 600 °C has the sufficiently low DTA exothermic peak temperature as compared to the noble metal (Pt) catalyst before the water washing. However, after the water washing, the DTA exothermic peak temperature of the catalyst drastically increased to be higher than the DTA exothermic peak temperature of the noble metal catalyst (about 520 °C (see Fig. 1)). That is, the combustion promoting characteristics for the carbon-based material was not sufficient after the water washing.

The mixture of the zeolite and potassium carbonate without being burned also exhibited the excellent combustion promoting characteristics for the carbon-based material before the water washing, but the combustion promoting characteristics of the mixture was drastically decreased after the water washing.

In the catalyst obtained by being burned at a temperature below 600 °C and the catalyst manufactured without being burned, the combustion promoting characteristics for the carbon-based material was drastically reduced after the water washing as mentioned above for the following reason. After the water washing, potassium is supposed to be eluted.

Thus, according to this example, the burning temperature in the burning step needs to be performed at a temperature of 600 °C or more. As can be seen from Fig. 5, the burning is preferably performed at a temperature from 700 °C to 1200 °C, and more preferably at a temperature from 800 °C to 1100 °C, which can provide the carbon-based material combustion catalyst with more excellent combustion promoting characteristics and water resistance.

### (Example 4)

In the present example, an influence of the amount of the alkali metal element added to the zeolite in the mixing step on the catalytic activity was examined.

That is, in the present example, zeolite is mixed with potassium carbonate at different mixing ratios to manufacture a plurality of carbon-based material combustion catalysts. Then, the combustion promoting characteristics for the carbon-based material are examined.

The carbon-based material combustion catalyst in the present example is manufactured by the same mixing and burning steps as those in Example 1, except for changing the mixing ratio of the zeolite to the potassium carbonate.

Specifically, first, a LTA type zeolite having the ratio of SiO₂/Al₂O₃ (mol ratio) of 2.0 ("A-3" manufactured by Tosoh Corporation) was prepared in the same manner as in Example 1.

Next, 100 parts by weight of zeolite was mixed with 0 to 100 parts by weight of potassium carbonate to obtain mixtures.

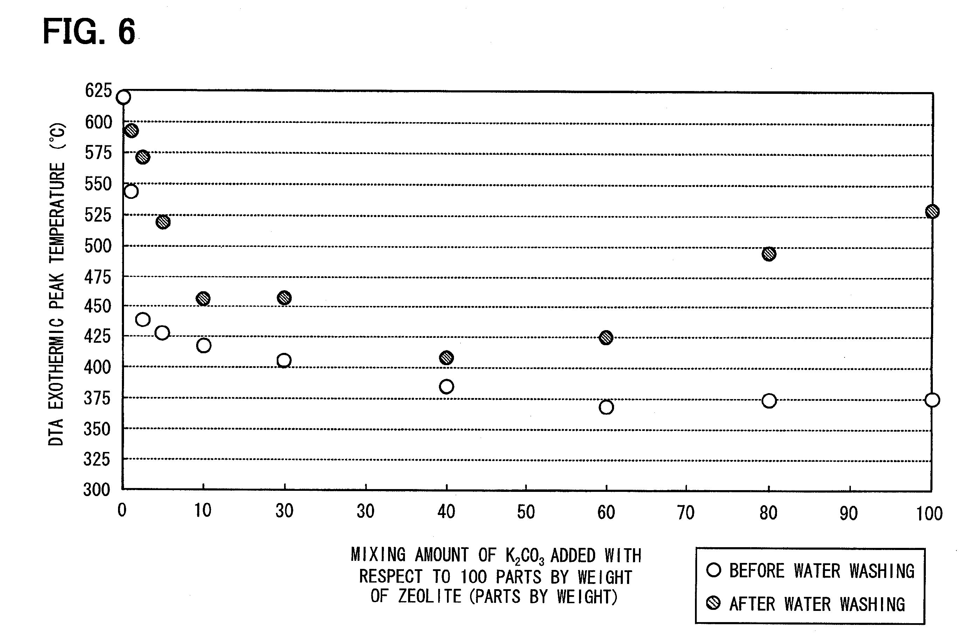

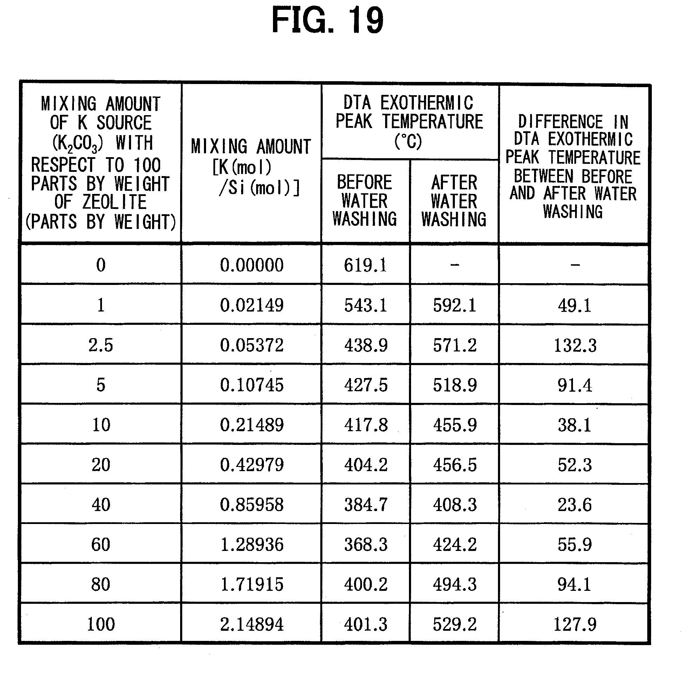

Specifically, as shown in Figs. 19 and 6 to be described later, 100 parts by weight of zeolite was respectively mixed with 0 part by weight, 1 part by weight, 2.5 parts by weight, 5 parts by weight, 10 parts by weight, 20 parts by weight, 40 parts by weight, 60 parts by weight, 80 parts by weight, and 100 parts by weight of potassium carbonate to manufacture a plurality of mixtures.

Such mixing was performed in water in the same manner as that of the specimen E1 in Example 1 to evaporate the water from the liquid mixture as mentioned above, thereby obtaining a plurality of mixtures (solids) with different compounding ratios of the K element.

Then, the mixtures were heated at the temperature increasing ratio of 100 °C/hr. After the temperature of the mixture reaches 1000 °C, the solid is maintained at this temperature for 10 hours. Thus, the mixtures were burned. Thereafter, the thus-obtained burned material is pulverized so as to have a median diameter of 10 µm or less and a maximum grain size of 100 µm or less, thereby obtaining ten kinds of combustion catalysts with the different compounding ratios of the K element.

The combustion promoting characteristics of the thus-obtained carbon-based material combustion catalysts for the carbon-based material before and after the water washing were examined in the same way as the specimen E1 of Example 1. The measurement of the combustion promoting characteristics was performed by measuring the DTA exothermic peak temperature in the same manner as the specimen E1 of Example 1. Figs. 19 and 6 show the results thereof.

Fig. 19 shows values obtained by converting the amount (parts by weight) of mixing of the K element to 100 parts by weight of zeolite, into the amount of mixing of the K element "K/Si" (mol) with respect to the Si amount (mol) of the zeolite (see Fig. 19).

As can be seen from Figs. 19 and 6, a carbon-based material combustion catalyst with the low DTA exothermic peak temperature before and after the water washing and with the excellent combustion promoting characteristics was obtained in the mixing step in the following case. The combustion catalyst was obtained when the zeolite and the potassium carbonate were mixed such that the amount of K of the potassium carbonate is 0.1 to 2.0 mol with respect to 1 mol of the Si element of the zeolite. That is, the combustion catalyst was obtained when 5 to 80 parts by weight of the potassium carbonate was mixed with 100 parts by weight of zeolite in the mixing step of the present example.

In contrast, when the amount of the K element is outside the range of 0.1 to 0.2 mole as mentioned above, the exothermic peak temperature after the water washing was high, and thus the thus-obtained catalyst had the low water resistance.

Preferably, the amount of the K element of the potassium carbonate is set to not less than 0.2 mol and not more than 1.5 mol with respect to 1 mol of the Si element of the zeolite. In this case, the carbon-based material combustion catalyst can be provided with more excellent water resistance (see Figs. 19 and 6).

As can be seen from this example mentioned above it is necessary to mix the zeolite and the potassium carbonate (alkali metal source) such that the amount of the K element (alkali metal element) of the potassium carbonate is 0.1 to 2.0 mol with respect to 1.0 mol of the Si element of the zeolite.

### (Example 5)

In the present example, in the mixing step, various alkali metal sources or alkaline earth metal sources were added to the zeolite to manufacture the carbon-based material combustion catalysts. The combustion promoting characteristics of the carbon-based material combustion catalysts were examined.

The carbon-based material combustion catalyst in the present example was manufactured by the same mixing and burning steps as those in Example 1 except for changing the alkali metal source or alkaline earth metal source mixed with the zeolite.

Specifically, first, a LTA type zeolite having the ratio of SiO₂/ Al₂O₃ (mol ratio) of 2.0 ("A-3" manufactured by Tosoh Corporation) was prepared in the same way as in Example 1.

Then, various alkali metal sources (sodium carbonate, potassium carbonate, rubidium carbonate, or cesium carbonate), or various alkaline earth metal sources (magnesium hydroxide, calcium carbonate, strontium carbonate, or barium carbonate) were mixed. The mixing ratio of various alkali metal sources or alkaline earth metal sources to the zeolite was set such that the amount of the alkali metal element of the alkali metal source, or the amount of the alkaline earth metal of the alkaline earth metal source was 0.225 mol with respect to 1 mol of the Si element of the zeolite, like Example 1.

Also, in the present example, mixing was performed in water to evaporate the water from the liquid mixture in the same way as in Example 1, thereby to manufacture the mixtures (solids) of various alkali metal sources or alkaline earth source with the zeolite.

Then, the mixtures were heated at the temperature increasing rate of 100 °C/hr. After the temperature of the mixture reaches 1000 °C, it is maintained for 10 hours. In the above described manner, each mixture was burned. Then, the thus-obtained burned material was pulverized so as to have a median diameter of 10 µm or less and a maximum grain size of 100 µm or less, which provided eight kinds of the carbon-based material combustion catalysts including different alkali metal elements (Na, K, Rb, or Cs) or alkaline earth metal elements (Mg, Ca, Sr, or Ba).

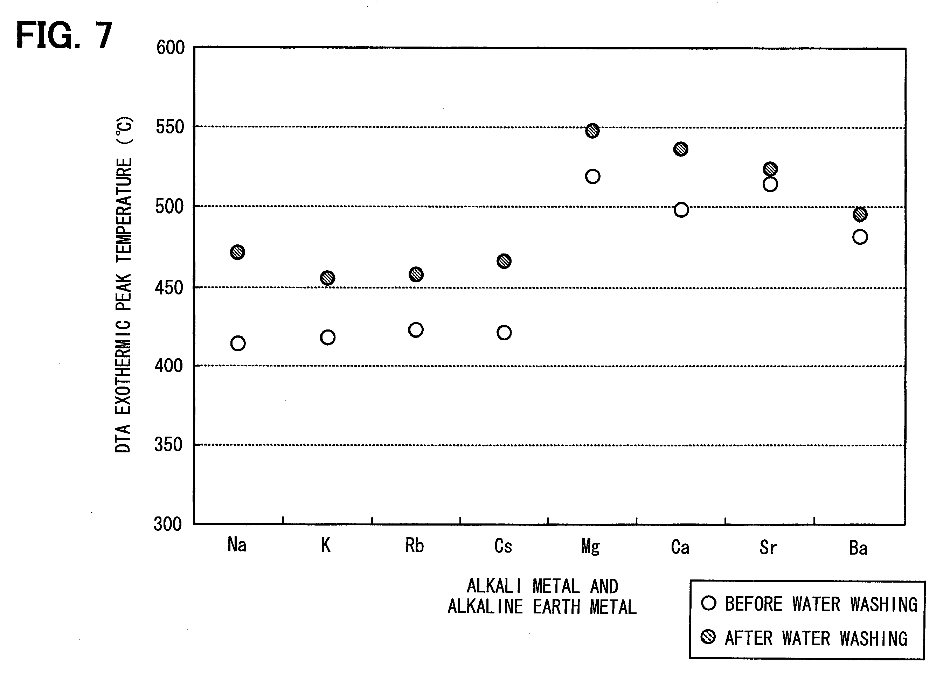

The combustion promoting characteristics of the thus-obtained carbon-based material combustion catalysts for the carbon-based material before and after the water washing were examined in the same way as the above-mentioned specimen E1 of Example 1. The measurement of the combustion promoting characteristics was performed by measuring the DTA exothermic peak temperatures of the catalysts in the same way as that of the specimen E1 in Example 1. Fig. 7 shows the results thereof. In Fig. 7, the horizontal axis indicates the kinds of alkali metal elements of the alkali metal source and the kinds of alkaline earth metal element of the alkaline earth metal source which are added in the mixing step, and the longitudinal axis indicates DTA exothermic peak temperatures of the combustion catalysts.

As can be seen from Fig. 7, the combustion catalysts manufactured using various alkali metal sources or alkaline earth metal sources, in any case, exhibited the DTA exothermic peak temperatures substantially equal to or lower than that of the conventional noble metal catalyst before and after the water washing.

Particularly, in use of the alkali metal source or in use of the alkaline earth source as a Ba source (barium carbonate), the more excellent carbon-based material combustion catalyst can be obtained which has the DTA exothermic peak temperature below 500 °C also after the water washing.

Accordingly, in the present example, even the use of various alkali metal sources or alkaline earth metal sources in the mixing step can manufacture the combustion catalyst that can cause the carbon-based material to be stably burned and removed at a low temperature for a long time even in the presence of water.

### (Example 6)

In the present example, the carbon-based material combustion catalyst is supported on the ceramic substrate 22 having a honeycomb structure (ceramic honeycomb structure) to manufacture the catalyst carrier 2.

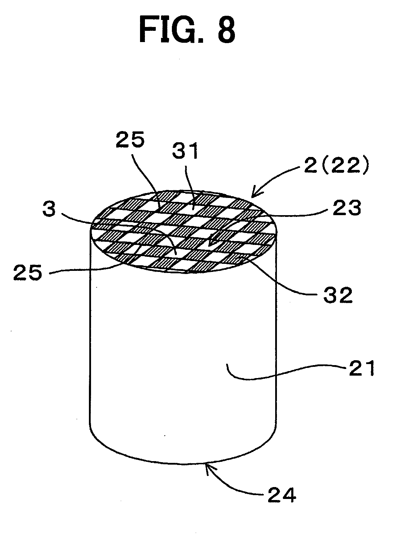

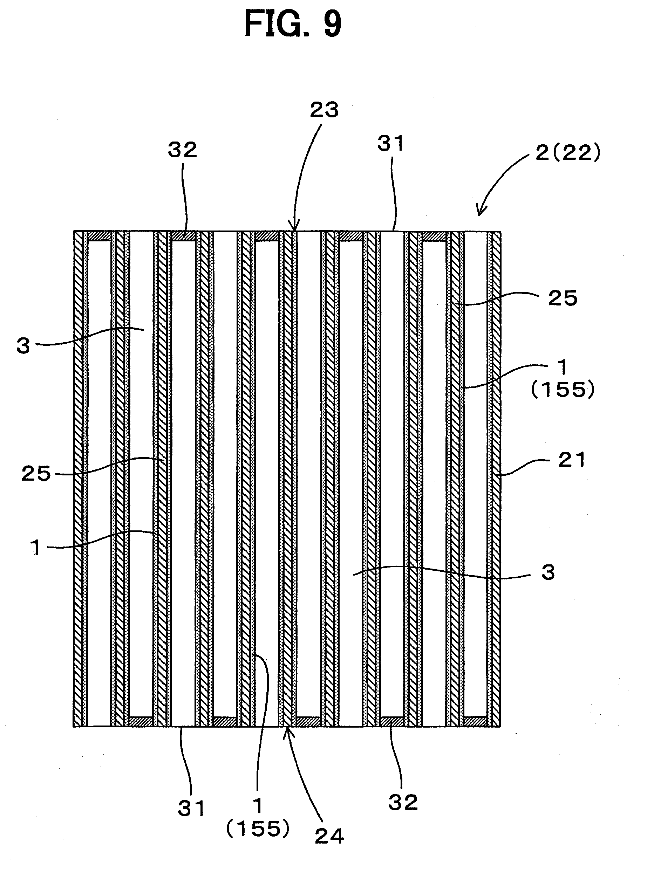

As shown in Figs. 8 to 10, the ceramic substrate 22 of this example includes an outer peripheral wall 21, partition walls 25 formed in a honeycomb shape inside the outer peripheral wall 21, and a plurality of cells 3 partitioned by the partition walls 25. The cell 3 is partly opened to two ends 23 and 24 of the ceramic substrate 22. That is, parts of the cells 3 are opened to the two ends 23 and 24 of the ceramic substrate 22, while the remaining cells 3 are closed with stoppers 32 formed on the two ends 23 and 24. As shown in Figs. 8 and 9, in the present example, an opening 31 for opening the end of the cell 3 and the stoppers 32 for closing the end of the cell 3 are alternately arranged to form a so-called checkered pattern. The carbon-based material combustion catalyst 1 (specimens E1) manufactured in Example 2 is supported on the partition walls 25 of the ceramic substrate 22. As shown in Fig. 11, the bonding layer 155 made by burning alumina sol is formed on the partition walls 25, so that the carbon-based material combustion catalyst 1 is supported in the bonding layer 155. The bonding layer 155 consists of oxide ceramic particles 15 made of alumina connected together, and the combustion catalyst 1 or catalyst particles are dispersed into the bonding layer 155.

As shown in Fig. 10, parts where the stoppers 32 are disposed and the other parts where the stoppers 32 are not disposed in the catalyst carrier 2 of this example are alternately arranged on both ends of the cell positioned at the end 23 on the upstream side which is an inlet side of an exhaust gas 10 and at the end 24 on the downstream side which is an outlet of the exhaust gas 10. A number of holes are formed in the partition wall 2 to allow the exhaust gas 10 to flow therethrough.

The catalyst carrier 2 of this example entirely has a diameter of 160 mm, and a length of 100 mm, and each cell has a thickness of 3 mm, and a cell pitch of 1.47mm.

The ceramic substrate 22 is made of cordierite, and the cell 3 used has a rectangular section. The cell 3 for use can have various other sectional shapes, for example, a triangular shape, a hexagonal shape, and the like.

In the present example, the opening 31 for opening the end of the cell 3 and the stopper 32 for closing the end of the cell 3 are alternately arranged to form the so-called checkered pattern.

Next, a manufacturing method of the ceramic honeycomb structure of this example will be described below.

First, talc, molten silica, and aluminum hydroxide were measured so as to form a desired cordierite composition, and a pore-forming agent, a binder, water, and the like were added to these materials measured, which were mixed and stirred by a mixing machine. The thus-obtained clayish ceramic material was pressed and molded by a molding machine to obtain a molded member having a honeycomb shape. After drying, the obtained molded member was cut into a desired length, which manufactured a molded member including an outer peripheral wall, partition walls provided inside the wall in a honeycomb shape, and a plurality of cells partitioned by the partition walls and penetrating both ends. Then, the molded member was heated to a temperature of 1400 to 1450 °C for 2 to 10 hours to be temporarily burned so as to obtain a temporary burned member (honeycomb structure).

Then, a masking tape is affixed to the honeycomb structure so as to cover both entire ends of the honeycomb structure. A laser light was applied in turn to parts of the masking tape corresponding to positions where the stoppers are to be disposed on both ends of the ceramic honeycomb structure, and the masking tape was melted, or burned and removed to form through holes. Thus, the through holes were formed at parts of the ends of the cells where the stoppers are to be disposed. The parts other than the ends of the cells were covered with the masking tape. In the present example, the through holes were formed in the masking tape such that the through holes and the parts covered with the masking tape are alternately disposed on both ends of the cells. In the present example, the masking tape used is a resin film having a thickness of 0.1 mm.

Next, the talc, the molten silica, the alumina, and the aluminum hydroxide, which are main raw materials used for the stopper, were measured so as to have the desired composition, and the binder, water, and the like were added to these materials measured, which were mixed and stirred by the mixing machine to manufacture the slurry stopper material. At this time, the pore-forming agent can be added if necessary. After preparing a case including the slurry stopper material, the end surface of the honeycomb structure partly having the through holes is immersed into the slurry material. Thus, the stopper material is inserted in an appropriate amount from the through holes of the masking tape into the ends of the cells. The other end of the honeycomb structure was subjected to the same process. In the above described manner, the honeycomb structure was obtained in which the stopper material is disposed in the openings of the cells to be closed.

Then, the honeycomb structure and the stopper material disposed in the positions to be closed were simultaneously burned at about 1400 to 1450 °C. Thus, the masking tape was burned and removed thereby to manufacture a ceramic honeycomb structure (ceramic substrate) 22 having a plurality of openings 31 for opening the ends of the cells, and a plurality of stoppers 32 for closing the ends of the cells 3 formed at both ends of the cells 3 as shown in Fig. 8.

Then, the carbon-based material combustion catalyst (specimen E1) manufactured in Example 1 was mixed with alumina slurry containing 3 wt% alumina zol. Further, water was added to the mixture to adjust the mixture to a desired viscosity, thereby providing a slurry composite material. The partition walls 25 of the ceramic substrate 22 were coated with the composite material. Thereafter, the ceramic substrate was burned by being heated at a temperature of 500 °C. The amount of coating of the composite material was 60 g per 1 L of the substrate (honeycomb structure). In the above described manner, as shown in Figs. 8, 9, and 11, the catalyst carrier 2 supporting the carbon-based material combustion catalyst 1 on the ceramic substrate 22 was obtained.

The catalyst carrier 2 of the present example supports the carbon-based material combustion catalyst 1 (specimen E1) of Example 1 on the cell wall 22. Thus, the honeycomb structure 2 can cause the carbon-based material to be burned at a low temperature without rotting the substrate using the excellent property of the carbon-based material combustion catalyst 1. Furthermore, water hardly reduces the catalytic activity for the carbon-based material.

The carbon-based material combustion catalyst (specimen E1) is formed by burning the mixture of the zeolite and the alkali metal source (potassium carbonate). Such a carbon-based material combustion catalyst relatively strongly holds an alkali metal element (K) therein, and thereby the elution of the alkali metal hardly occurs. Thus, when the carbon-based material combustion catalyst is supported on the honeycomb structure, the elution of the alkali metal and further the corrosion of the ceramic substrate can be prevented.

Although in the present example, the catalyst carrier is manufactured using the ceramic substrate (ceramic honeycomb structure) made of cordierite, porous ceramics with high heat resistance made of, for example, SiC, aluminum titanate, or the like can be used to manufacture the same catalyst carrier. Although in the present example, the ceramic honeycomb structure with the end of the cell closed by the stopper is used as the above-mentioned ceramic substrate, for example, a ceramic honeycomb structure without stoppers can be used in order to reduce a loss in pressure.

In forming of the catalyst carrier for supporting the carbon-based material combustion catalyst whose composition contains not only composite oxide particles, but also a rare-earth element, when the carbon-based material combustion catalyst (specimen E1) is mixed with the alumina slurry containing 3 wt% alumina sol, oxide particles consisting of, for example, CeO₂, ZrO₂, CeO₂-ZrO₂ solid solution, or the like can be further added to manufacture the catalyst carrier.

In forming of the catalyst carrier for carrying noble metal in addition to the carbon-based material combustion catalyst, when the carbon-based material combustion catalyst (specimen E1) is mixed with the alumina slurry containing 3 wt% alumina sol, for example, a platinum nitrate solution can be further dispersed by a predetermined amount to manufacture the carrier.

### (Comparative Example 2)

In the present example, a catalyst carrier for supporting the mixture of zeolite not burned and an alkali metal source (potassium carbonate) on a ceramic substrate was manufactured as a comparative example with respect to the catalyst carrier of Example 6.

The catalyst carrier manufactured in the present example was the same as that in Example 6 except for the type of supported catalyst.

In manufacturing the catalyst carrier of this example, first, a ceramic substrate (ceramic honeycomb structure) made of the same kind of cordierite as that in Example 3 was prepared.

Specifically, a LTA type zeolite ("A-3" manufactured by Tosoh Corporation) having a ratio (SiO₂/Al₂O₃) (mole ratio) of 2.0 mol of SiO₂ with respect to 1.0 mol of Al₂O₃ was prepared as the zeolite in the same manner as in Example 1.

Then, the zeolite and the potassium carbonate were introduced into water and then mixed in the water such that the amount of K of the potassium carbonate was 0.255 mol with respect to 1 mol of the Si element in each type of zeolite. Then, the liquid mixture was heated at a temperature of 120 °C to evaporate the water, thereby obtaining the solid (mixture). In the above described manner, the mixture consisting of the zeolite and the potassium carbonate were obtained.

Then, the mixture was mixed with the alumina slurry containing 3 wt% alumina sol, and water was added thereto to adjust the mixture to a desired viscosity, thereby obtaining the slurry composite material. Then, like Example 6, the partition walls of the ceramic substrate were coated with the slurry composite material, and heated at a temperature of 500 °C, so that the mixture was burned on the ceramic substrate. In the above described manner, the catalyst carrier for the purpose of comparison was obtained.

When the catalyst carrier obtained in the present example was observed, cracks were occurred in a part of the ceramic substrate.

That is, when the mixture of the zeolite not burned and the alkali metal source (potassium carbonate) is supported on the ceramic substrate, the alkali metal (potassium) is easily eluted from the mixture in heating, for example, in burning or the like. The eluted alkali metal attacks the cordierite component of the ceramic substrate to break a crystal system. Thus, the thermal expansion coefficient and strength of the ceramic substrate partly changes to easily cause the ceramic substrate to have cracks or the like as mentioned above.

In contrast, in Example 6 mentioned above, the carbon-based material combustion catalyst was subjected to the above-mentioned burning step which involves burning the catalyst at a temperature of 600 °C or more. Then, the catalyst was supported on the ceramic substrate. Such a carbon-based material combustion catalyst relatively strongly holds the alkali metal element therein, thereby enabling prevention of the elution of the alkali metal element in the following heating step. Thus, the carbon-based material combustion catalyst can be burned and supported on the ceramic substrate without cracks.

### BRIEF DESCRIPTION OF THE DRAWINGS

Fig. 1 is an explanatory diagram showing DTA exothermic peak temperatures before and after water washing when carbon-based material is burned using respective catalyst species or without using any catalyst in Example 1.
Fig. 2 is an explanatory diagram showing DTA exothermic peak temperatures before and after water washing of carbon-based material combustion catalysts provided by burning mixtures of various zeolites and potassium carbonate in Example 2.
Fig. 3 is an explanatory diagram showing DTA exothermic peak temperatures before and after the water washing when the mixtures of various zeolites and the potassium carbonate are used as the catalyst in Example 2.
Fig. 4 is an explanatory diagram showing DTA exothermic peak temperatures before and after the water washing when burned materials made by singly burning various zeolites are used as the catalyst in Comparative Example 1.
Fig. 5 is an explanatory diagram showing DTA exothermic peak temperatures before and after the water washing of the carbon-based material combustion catalysts manufactured at various different burning temperatures in Example 3.
Fig. 6 is an explanatory diagram showing DTA exothermic peak temperatures before and after the water washing of the carbon-based material combustion catalysts manufactured by mixing potassium into zeolite in various different amounts in Example 4.
Fig. 7 is an explanatory diagram showing DTA exothermic peak temperatures before and after the water washing of the carbon-based material combustion catalysts manufactured using various different alkali metal element species or alkaline earth metal element species in Example 5.
Fig. 8 is a perspective view of a catalyst carrier (ceramic honeycomb structure) in Example 6.
Fig. 9 is a sectional view taken in the longitudinal direction of the catalyst carrier (ceramic honeycomb structure) in Example 6.
Fig. 10 is a sectional view of the catalyst carrier, showing a manner in which the exhaust gas passes through the catalyst carrier (ceramic honeycomb structure) in Example 6.
Fig. 11 is a sectional view of the catalyst carrier structure which includes carbon-based material combustion catalysts dispersed into a bonding layer consisting of oxide ceramic particles connected together.
Fig. 12 is a sectional view of a catalyst carrier structure which includes carbon-based material combustion catalysts and rare-earth elements which are dispersed into a bonding layer consisting of oxide ceramic particles connected together.
Fig. 13 is a sectional view of another catalyst carrier structure which includes carbon-based material combustion catalysts, rare-earth elements, and noble metal dispersed into a bonding layer consisting of oxide ceramic particles connected together.
Fig. 14 is an explanatory diagram showing a state in which the noble metal is supported on an oxide particle.
Fig. 15 is an explanatory diagram showing a state in which the noble metal is supported on a rare-earth element including an oxide particle of the rare-earth element.
Fig. 16 is a sectional view of a catalyst carrier structure having a noble metal layer formed on a bonding layer containing the carbon-based material combustion catalyst formed on a base.
Fig. 17 is a sectional view of a catalyst carrier structure having a noble metal layer formed between a base and a bonding layer containing carbon-based material combustion catalysts.
Fig. 18 is a diagram showing the kinds of zeolites and the ratios of SiO₂/Al₂O₃ in zeolite compositions.
Fig. 19 is a diagram showing the result of DTA exothermic peak temperatures before and after the water washing of combustion catalysts manufactured using potassium carbonate.

## Claims

1. A method of manufacturing a carbon-based material combustion catalyst, the combustion catalyst being adapted for burning a carbon-based material contained in an exhaust gas from an internal combustion engine, while being supported on a ceramic substrate, the method comprising the steps of:
mixing an aluminosilicate having an atomic equivalent ratio of Si/Al ≥ 1, and an alkali metal source and/or an alkaline earth metal source in water;
drying a liquid mixture by heating a mixture after the mixing step and evaporating water thereby to obtain a solid; and
burning the solid at a temperature of 600 °C or more thereby to obtain the carbon-based material combustion catalyst,
wherein the aluminosilicate is zeolite except for sodalite, and
wherein the mixing is performed in the mixing step such that a total amount of an alkali metal element and an alkaline earth metal element contained in the alkali metal source and/or the alkaline earth metal source is not less than 0.1 mol and not more than 2.0 mol with respect to 1 mol of Si element of the aluminosilicate.

2. The method of manufacturing a carbon-based material combustion catalyst according to claim 1, wherein in the mixing step, the zeolite in which an amount of SiO₂ is less than 200 mol with respect to 1 mol of Al₂O₃ of a composition thereof is used as the aluminosilicate.

3. The method of manufacturing a carbon-based material combustion catalyst according to claim 1 or 2, wherein the alkali metal source includes one or more elements selected from the group consisting of Na, K, Rb, and Cs, and the alkaline earth metal source includes one or more elements selected from the group consisting of Mg, Ca, Sr, and Ba.

4. The method of manufacturing a carbon-based material combustion catalyst according to any one of claims 1 to 3, wherein each of the alkali metal source and/or the alkaline earth metal source is a carbonate, a sulfate, a phosphate, a nitrate, an organic acid salt, a halide, an oxide, or a hydroxide.

5. The method of manufacturing a carbon-based material combustion catalyst according to any one of claims 1 to 4, wherein in the mixing step, the aluminosilicate and at least the alkali metal source are mixed.

6. The method of manufacturing a carbon-based material combustion catalyst according to any one of claims 1 to 5, wherein in the mixing step, the alkaline earth metal source containing at least Ba is used as the alkaline earth metal element.

7. The method of manufacturing a carbon-based material combustion catalyst according to any one of claims 1 to 6, wherein in the mixing step, the aluminosilicate and the alkali metal source and/or the alkaline earth metal source are mixed such that the total amount of the alkali metal element and the alkaline earth metal element contained in the alkali metal source and/or the alkaline earth metal source is not less than 0.2 mol and not more than 1.5 mol with respect to 1 mol of the Si element of the aluminosilicate.

8. The method of manufacturing a carbon-based material combustion catalyst according to any one of claims 1 to 7, wherein in the mixing step, a polar solvent other than water is used instead of water, and the aluminosilicate and the alkali metal source and/or the alkaline earth metal source are mixed in the polar solvent, and
wherein in a drying step, the polar solvent is evaporated to obtain the solid.

9. The method of manufacturing a carbon-based material combustion catalyst according to any one of claims 1 to 8, wherein in the burning step, the solid is burned at a temperature in a range between 700 and 1200 °C.

10. The method of manufacturing a carbon-based material combustion catalyst according to any one of claims 1 to 9, further comprising a step of pulverizing the carbon-based material combustion catalyst after the burning step.

11. A carbon-based material combustion catalyst obtained by the manufacturing method according to any one of claims 1 to 10.

12. A method of manufacturing a catalyst carrier for supporting a carbon-based material combustion catalyst on a ceramic substrate, the combustion catalyst being adapted for burning carbon-based material contained in exhaust gas from an internal combustion engine, the method comprising a step of supporting the combustion catalyst made by the manufacturing method according to any one of claims 1 to 10 on the ceramic substrate.

13. The method of manufacturing a catalyst carrier according to claim 12, wherein in the supporting step, at least the carbon-based material combustion catalyst and sol or slurry oxide ceramic particles are mixed to form a composite material, and the ceramic substrate is coated with the composite material and then heated.

14. The method of manufacturing a catalyst carrier according to claim 12, wherein the oxide ceramic particles mainly contain one or more elements selected from the group consisting of alumina, silica, titania, and zirconia.

15. The method of manufacturing a catalyst carrier according to any one of claims 12 to 14, wherein the ceramic substrate is made of cordierite, SiC, or aluminum titanate.

16. The method of manufacturing a catalyst carrier according to any one of claims 12 to 15, wherein the ceramic substrate has a honeycomb structure.

17. A catalyst carrier obtained by the manufacturing method according to any one of claims 12 to 16.
